Europäisches Patentamt

European Patent Office

Office européen des brevets

(11) Numéro de publication: **0 069 684**
A1

# DEMANDE DE BREVET EUROPEEN

(21) Numéro de dépôt: **82420077.8**

(22) Date de dépôt: **14.06.82**

(51) Int. Cl.³: **A 63 G 31/00**
**A 63 B 9/00, F 16 B 12/24**
**A 47 D 11/00**

(30) Priorité: **17.06.81 FR 8112062**

(43) Date de publication de la demande:
**12.01.83 Bulletin 83/2**

(84) Etats contractants désignés:
**AT BE CH DE GB IT LI LU NL SE**

(71) Demandeur: **SPORTLUX**
**Rue des Brotteaux B.P. 19**
**F-01700 Miribel(FR)**

(72) Inventeur: **Provoyeur, Claude**
**13B, avenue de l'Europe Appt. 213**
**F-69250 Neuville-sur-Saone(FR)**

(74) Mandataire: **Karmin, Roger et al,**
**Cabinet MONNIER 150, cours Lafayette**
**F-69003 Lyon(FR)**

(54) **Perfectionnements aux dispositifs empilables à au moins quatre pieds.**

(57) Chacun des pieds (4, 4') comprend un pan incliné (4a, 4d) et deux méplats (4b, 4c - 4e, 4f) ménagés transversalement. Lorsque les pieds (4, 4') de deux dispositifs sont placés l'un sur l'autre, une goupille (7) est engagée dans leurs trous (4g, 4h) alignés. La goupille (7) fait partie d'une agrafe (8) dont l'embout (10) verrouille ladite agrafe par rapport à l'un des pieds.

Fig. 1

EP 0 069 684 A1

.../...

Fig. 4

## Perfectionnements aux dispositifs empilables à au moins quatre pieds

On sait que pour la réalisation de jeux éducatifs, on dispose généralement de parallélépipèdes rectangles empilables de manière à constituer des plateformes plus ou moins élévées ou encore un genre de support à partir duquel partent des toboggans, des échelles, des barres parallèles ou tout autre système propre à permettre l'amusement des enfants. Les parallélépipèdes empilables connus sont prévus à parois substantiellement pleines de telle sorte que leur poids étant élevé leur manipulation est difficile pour des enfants. Dans ces conditions l'utilisation de tels dispositifs est limitée ou elle nécessite l'intervention d'adultes.

Les perfectionnements qui font l'objet de la présente invention visent à remédier à ces inconvénients.

Suivant l'invention les parallélépipèdes sont réalisés sous la forme de dispositifs comportant quatre pieds verticaux et des barreaux d'assemblage de telle sorte que chacun d'eux est léger même s'il comporte un panneau horizontal, celui-ci pouvant être réalisé en un matériau à faible poids volumique. L'empilage des dispositifs suivant l'invention est réalisé grâce à un assemblage particulier des pieds. A cet effet chacune des extrémités desdits pieds comprend un pan incliné dont les arêtes supérieure et inférieure sont contenues dans le plan géométrique horizontal de deux méplats ménagés transversalement par rapport à l'axe géométrique des pieds. Les pans des pieds sont tournés vers l'extérieur pour une extrémité de ceux-ci et vers l'intérieur pour l'autre. Chacun des pans considérés est percé d'un trou afin qu'après empilage de deux dispositifs les extrémités en correspondance de leurs pieds puissent être assemblées et assujetties par une goupille. De manière que celle-ci ne puisse être démontée par inadvertance, elle comporte des moyens de retenue par rapport aux deux extrémités assemblées des pieds.

Le dessin annexé, donné à titre d'exemple permettra de
mieux comprendre l'invention, les caractéristiques qu'elle
présente et les avantages qu'elle est susceptible de procurer:

Fig. 1 est une vue en perspective montrant deux dispositifs empilables suivant l'invention représentés l'un
au-dessus de l'autre avec leur assemblage.

Fig. 2 est une coupe transversale illustrant l'assemblage des extrémités correspondantes des pieds des deux
dispositifs illustrés en fig. 1.

Fig. 3 est une vue en perspective montrant la manière
dont est engagée la goupille d'assujettissement de
l'assemblage illustré en fig. 2. On a représenté sur
cette figure le plan de coupe II-II de fig. 2.

Fig. 4 est une vue semblable à celle de fig. 3 mais
montrant la goupille en position de repos après sa
mise en place.

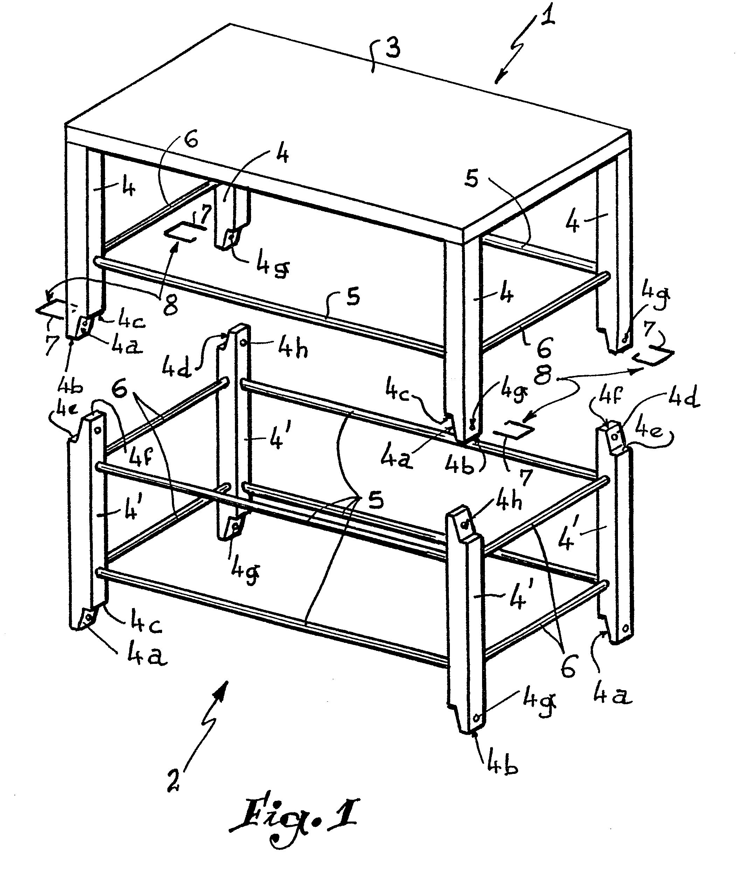

On a illustré en fig. 1 deux dispositifs empilables suivant
l'invention dont l'un référencé 1 se présente sous la forme
d'une table, tandis que le second référencé 2 ne comporte
pas de plateau.

Le dispositif 1 est pourvu d'un plateau 3 à partir de
chacun des angles duquel partent perpendiculairement quatre
pieds 4 entretoisés par des barreaux 5 et 6 parallèles à ce
plateau.

Le dispositif 2 comprend également quatre pieds 4 dont
l'écartement correspond exactement à celui des pieds du
dispositif 1 et qui sont entretoisés par deux jeux de
barreaux 5 et 6.

Le bas des pieds 4 du dispositif 1 est formé d'un pan
incliné 4a qui aboutit à deux méplats horizontaux 4b, 4c.
On observe que les pans 4a des quatre pieds du dispositif 1 sont orientés vers l'intérieur c'est-à-dire qu'ils se font face deux à deux pour les pieds placés à chacune des extrémités de la plus grande longueur du panneau 3. Dans le sens transversal les pans inclinés 4a des pieds 4 situés aux deux extrémités du panneau 3 se trouvent dans un même plan parallèle à la plus petite des arêtes dudit panneau.

Si l'on considère maintenant le second dispositif 2, les extrémités inférieures de ses pieds 4' sont rigoureusement agencées de la même manière que les extrémités correspondantes du premier élément 1, tandis que les extrémités supérieures des pieds du second dispositif sont orientés à l'inverse. Autrement dit les pans inclinés 4d desdites extrémités supérieures des pieds 4' du second dispositif sont orientés vers l'extérieur et sont limités par des méplats horizontaux 4e, 4f dont la distance correspond à celle séparant les méplats 4b, 4c des pieds 4 du dispositif 1.

Ainsi lorsqu'on place les deux dispositifs l'un sur l'autre, c'est-à-dire que leurs pieds viennent dans le prolongement l'un de l'autre, les méplats 4c, 4f respectivement 4b, 4e viennent en appui les uns sur les autres tandis que les pans inclinés 4a, 4d sont en contact.

Ainsi il ne peut y avoir de déplacement horizontal longitudinal du dispositif 1 par rapport à celui 2 du fait de la coopération des pans inclinés 4a et 4d qui se trouvent opposés. Chacune des extrémités des pieds 4, 4' est pourvue d'un trou horizontal 4g, 4h respectivement. Lorsque les extrémités des pieds 4, 4' des éléments 1 et 2 sont placées l'une contre l'autre, les trous 4g, 4h se trouve alignés de telle sorte qu'on peut engager une goupille 7 propre à assurer une immobilisation de l'assemblage. Ainsi grâce à cette goupille il n'est pas possible d'élever seul le dispositif 1 par rapport à celui 2 ni de le faire glisser transversalement puisque ses pieds sont retenus par la goupille 7.

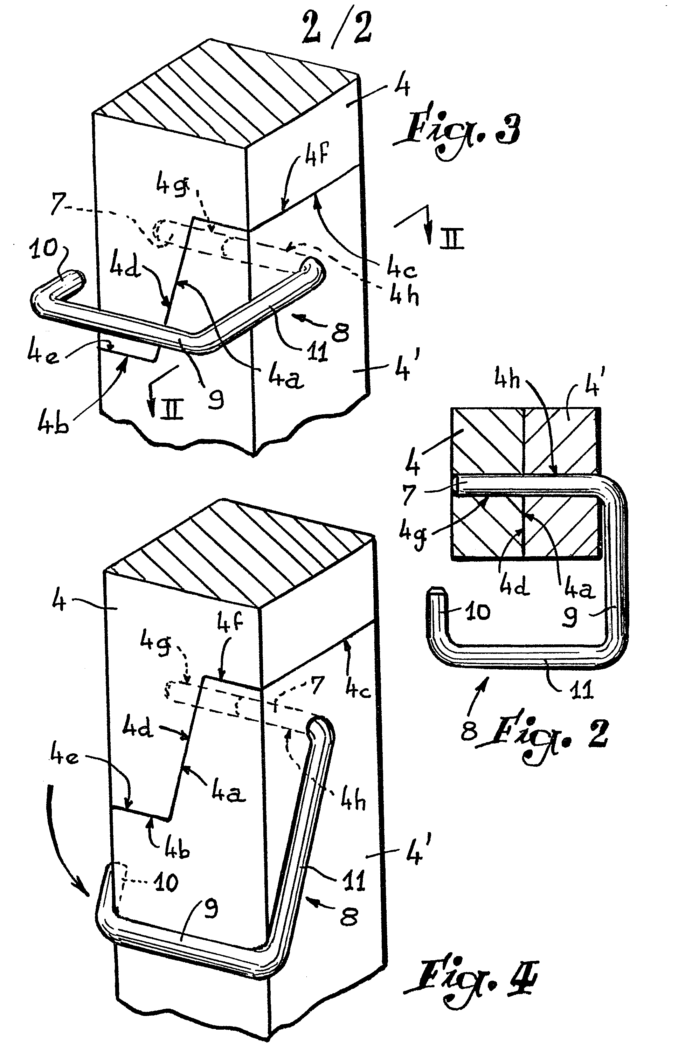

Afin que la goupille en question ne puisse pas être extraite par inadvertance, elle constitue l'une des branches d'une agrafe en U référencée 8 dont l'autre branche 9 se prolonge par un embout 10 parallèle à la partie transversale 11 de l'agrafe 8. On observe que tous les éléments de celle-ci se trouvent situés dans un même plan. La longueur de la partie transversale 11 de l'agrafe 8 est telle que lorsque la goupille 7 est engagée dans les perforations en vis-à-vis 4g, 4h, l'extrémité de l'embout 10 se trouve en-deçà de la face latérale verticale du pied 4. Par contre lorsque l'on relâche l'agrafe 8 après que sa goupille 7 ait été complètement engagée dans les perforations précitées, l'embout 10 vient coopérer avec l'une des faces du pied 4' (fig. 4) car la branche 9 présente une longueur à peu près égale à celle du côté du pied en question. Ainsi par la seule gravité l'agrafe 8 se verrouille par rapport au pied 4' de l'élément inférieur 2 de telle sorte qu'elle ne peut plus être extraite sans lui faire subir une rotation vers le haut.

On a ainsi réalisé des dispositifs empilables dont les pieds peuvent être verrouillés de manière simple et efficace de telle sorte que cette opération peut être réalisée par des enfants même en bas âge.

**0069684**

Revendications de brevet

1. Dispositif empilable à au moins quatre pieds (4, 4') disposés aux quatre sommets d'un quadrilatère à angle droit, caractérisé en ce que chacune des extrémités des pieds (4, 4') comprend un pan incliné (4a, 4d) dont les arêtes supérieure et inférieure sont contenues dans le plan géométrique horizontal de deux méplats (4b, 4c - 4e, 4f) ménagés transversalement par rapport à l'axe géométrique des pieds (4, 4'), les pans (4a) de chaque paire de pieds étant tournés vers l'extérieur pour une extrémité des pieds et vers l'intérieur pour l'autre, lesdits pans (4a, 4d) étant contenus dans un même plan transversal, tandis que lesdits pans sont percés d'un trou afin qu'après empilage de deux dispositifs (1, 2) les extrémités en correspondance de leurs pieds (4, 4') puissent être assemblées et assujetties par une goupille (7).

2. Dispositif suivant la revendication 1, caractérisé en ce que la goupille (7) comporte des moyens de retenue par rapport aux deux extrémités assemblées des pieds correspondants (4, 4').

3. Dispositif suivant la revendication 2, caractérisé en ce que la goupille (7) constitue l'une des branches d'une agrafe (8) en forme de U tandis que l'autre branche (9) est prolongée par un embout (10) parallèle à la partie transversale (11) de l'agrafe.

4. Dispositif suivant la revendication 3, caractérisé en ce que la partie transversale (11) de l'agrafe (8) est suffisamment longue pour que l'extrémité de l'embout (10) n'entre pas en contact avec la face correspondante des pieds lorsque la goupille (7) pénètre dans les trous (4g, 4h) des pieds (4, 4').

5. Dispositif suivant la revendication 3, caractérisé en ce que la longueur de la seconde branche (9) de l'agrafe (8) est telle que l'embout (10) vient coopérer avec la face de l'un des pieds (4, 4') qui est opposée à celle à partir de laquelle la goupille (7) est engagée dans les trous (4g, 4h).

Fig.1

*Fig. 3*

*Fig. 2*

*Fig. 4*

Office européen
des brevets

**RAPPORT DE RECHERCHE EUROPEENNE**

EP  82 42 0077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 572 698 (GREENLY) * colonne 1, lignes 24 à 33; colonne 3, lignes 73 à 75; colonne 4, lignes 1 à 32; colonne 5, lignes 21 à 24; figures 5,6 * | 1,2 | A 63 G 31/00 A 63 B 9/00 F 16 B 12/24 A 47 D 11/00 |
| A | US-A-3 115 253 (MALBIN) * colonne 1, lignes 9 à 37; colonne 2, lignes 25 à 42; colonne 3, lignes 45 à 59; figures 1,15,16 * | 1,2 | |
| A | US-A-3 236 003 (FLOOD) * colonne 1, lignes 44 à 60; colonne 2, lignes 45 à 54; figures 1,6,8 * | 1,2 | |
| A | FR-A- 780 702 (REENS) * page 1, lignes 43 à 62; page 2, lignes 1 à 40; 51 à 89; figures 1 à 6 * | 1,2 | **DOMAINES TECHNIQUES RECHERCHES (Int. Cl. 3)** |
| A | GB-A-1 011 568 (FUCHS) * page 1, lignes 10 à 36; dernier alinéa; page 2, lignes 1 à 13; figures 1 à 4 * | 1 | A 63 G A 63 B A 63 H F 16 B A 47 D |
| A | FR-A-2 068 196 (GYM-DANDY) * page 2, lignes 6 à 12; page 5, lignes 21 à 25; pge 15, lignes 37 à 40; page 16 en entier; page 17, premier alinéa; figure 9 * | 3-5 | |

-/-

Le présent rapport de recherche a été établi pour toutes les revendications

| Lieu de la recherche | Date d'achèvement de la recherche | Examinateur |
|---|---|---|
| LA HAYE | 24-09-1982 | MAROSCIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

# RAPPORT DE RECHERCHE EUROPEENNE

**0069684**

Numéro de la demande

Office européem
des brevets

EP 82 42 0077

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 237 145 (ZIMMERMANN) | | |
| A | FR-A-2 055 104 (DAHLER) | | |

**DOCUMENTS CONSIDERES COMME PERTINENTS**

DOMAINES TECHNIQUES RECHERCHES (Int. Cl. ³)

Le present rapport de recherche a été établi pour toutes les revendications

| Lieu de la recherche | Date d'achèvement de la recherche | Examinateur |
|---|---|---|
| LA HAYE | 24-09-1982 | MAROSCIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82